# FASCICULE DE BREVET EUROPEEN

(11) **EP 4 159 503 B1**
(45) Date de publication et mention de la délivrance du brevet: **05.06.2024**
(21) Numéro de dépôt: 22197898.4
(22) Date de dépôt: 27.09.2022
(51) Int. Cl.: B60J 10/60, B60J 10/17

(54) **JOINT D ETANCHEITE CHAUFFANT POUR UNE VITRE D'UN VEHICULE**
HEIZDICHTUNG FÜR EINE FAHRZEUGSCHEIBE
HEATABLE SEALING FOR A VEHICLE WINDOW PANE

(30) Priorité: 01.10.2021 FR 2110423
(43) Date de publication de la demande: 05.04.2023
(73) Titulaire: HUTCHINSON, 75008 Paris (FR)
(72) Inventeur: GABRIELLE, Brice, 45200 MONTARGIS (FR); BLOTTIAU, Olivier, 45200 AMILLY (FR); SZYMCZAK, Frank, 91490 DANNEMOIS (FR); THIBAULT, Serge, 75008 PARIS (FR)
(74) Mandataire: Gevers & Orès

(56) Documents cités:
- EP-A1- 3 031 645
- DE-A1- 19 651 733
- DE-A1-102018 107 099
- FR-A1- 3 062 085
- US-A1- 2013 312 330

## Description

### Domaine technique de l'invention

La présente invention concerne notamment un joint d'étanchéité chauffant pour une vitre d'un véhicule, en particulier automobile.

### Arrière-plan technique

Les vitres d'un véhicule automobile peuvent être chauffées directement ou indirectement, par exemple en hiver, pour faire fondre du givre déposé sur les vitres ou supprimer de la buée sur ces vitres.

Une vitre arrière de véhicule comprend par exemple un élément de chauffage en matériau résistif déposé par sérigraphie directement sur une surface de la vitre et alimenté par un circuit électrique.

Il a déjà été proposé d'équiper un joint d'étanchéité de vitre avec un élément de chauffage. L'élément de chauffage a pour fonction de chauffer une partie du joint qui est configuré pour coopérer par frottement ou glissement avec la vitre. De la chaleur est alors transmise par conduction du joint à la vitre et permet de faire fondre le givre ou supprimer la buée.

Un joint d'étanchéité chauffant de la technique actuelle comprend par exemple un fil de chauffage en matériau résistif qui est intégré dans le matériau du joint.

Cette technologie n'est toutefois pas satisfaisante. Le fil de chauffage permet de chauffer qu'une petite partie du joint. Pour chauffer une partie plus étendue du joint, il faudrait ajouter d'autres fils de chauffage ou surdimensionner le fil de chauffage, ce qui augmenterait le coût de revient du joint chauffant.

Par ailleurs, ce type de joint chauffant est relativement complexe et coûteux à réaliser. Le joint est en général réalisé par extrusion d'un matériau à travers une filière. Comme le fil de chauffage doit être intégré dans le corps du joint, il doit alimenter la filière lors de l'extrusion. Après fabrication, le corps du joint et le fil de chauffage sont indissociables. Dans le cas où le corps du joint comprendrait un défaut, il ne serait pas possible de récupérer le fil de chauffage pour le réutiliser avec un autre corps. De plus, après fabrication, le joint ainsi obtenu n'est pas encore fonctionnel. Les extrémités longitudinales du corps du joint doivent être retirées pour mettre à nu les extrémités longitudinales du fil de chauffage afin de le raccorder à un circuit électrique.

Il est également connu, par exemple du document DE 10 2018 107099 A1, d'équiper un joint d'étanchéité avec un flocage pour faciliter le glissement d'une partie du joint contre la vitre. Dans la présente demande, en entend par flocage, une couche de fibres en général courtes et fines. En cas de gel, de la glace peut être présente entre la vitre et le joint et solidariser le flocage du joint à la vitre. Le chauffage du joint, au niveau du flocage, permettrait de décoller le joint de la vitre. Toutefois, comme le flocage aurait une étendue supérieure à celle du fil chauffant, ce dernier ne permettrait pas de chauffer l'intégralité du flocage et donc de dégivrer efficacement le joint et la vitre.

La présente invention propose une solution à au moins une partie des problèmes de la technique antérieure, cette solution étant simple, efficace et économique.

### Résumé de l'invention

L'invention concerne un joint d'étanchéité pour une vitre d'un véhicule, en particulier automobile, ce joint comportant :
- un corps qui a une forme générale allongée le long d'un axe et qui est réalisé dans au moins un matériau,
- au moins un flocage situé sur une surface dudit corps et s'étendant le long dudit axe, et
- au moins un élément de chauffage s'étendant le long dudit axe, caractérisé en ce que ledit au moins un élément de chauffage comprend au moins un film de chauffage qui a une forme générale allongée le long dudit axe et qui est intercalé entre le flocage et ladite surface dudit corps, ce film de chauffage comprenant :
   - au moins deux bandes rectilignes électroconductrices qui s'étendent parallèlement entre elles et audit axe, à distance l'une de l'autre, et qui sont destinées à être reliées à un circuit électrique, et
   - au moins une piste résistive de chauffage qui s'étend entre lesdites bandes et qui sont reliées à ces bandes.

Selon l'invention, l'élément de chauffage se présente sous la forme d'un film de forme allongée. Ceci est particulièrement avantageux car, contrairement à un fil de chauffage, à même puissance, le film peut chauffer une plus grande surface du joint.

De plus, le film de chauffage n'est pas intégré dans le matériau du corps du joint. Il est intercalé entre une surface du corps et un flocage, c'est-à-dire qu'il peut être fixé sur la surface du corps postérieurement à sa fabrication. Ceci est avantageux car l'élément de chauffage n'a pas besoin d'alimenter la filière de fabrication du corps du joint par extrusion notamment. La fixation du film de chauffage sur le corps du joint peut être réalisée par collage par exemple.

Le film est multicouche c'est-à-dire qu'il comprend une superposition de plusieurs couches formées notamment par les bandes et la ou les pistes.

Par ailleurs, le film de chauffage est situé sous le flocage et on comprend donc que les dimensions du film de chauffage peuvent être adaptées aux dimensions du flocage de façon à ce qu'une grande surface voire la totalité de la surface du flocage soit chauffée directement par le film de chauffage. Ceci permet d'améliorer également l'efficacité du chauffage du joint ainsi que de la vitre qui est destinée à coopérer par glissement avec le joint et en particulier son flocage.

Le joint d'étanchéité selon l'invention peut comprendre une ou plusieurs des caractéristiques suivantes, prises isolément les unes des autres ou en combinaison les unes avec les autres :
- le corps comprend une lèvre élastiquement déformable qui s'étend le long dudit axe et qui comprend ladite surface ;
- la lèvre comprend deux portions longitudinales adjacentes reliées entre elles par une première charnière longitudinale intégrée dans cette lèvre, ledit au moins un flocage s'étendant sur au moins une de ces portions longitudinales et ledit au moins un film de chauffage étant situé sur au moins une de ces portions longitudinales ;
   -- ledit au moins un flocage s'étend sur les deux portions longitudinales et ledit au moins un film de chauffage est situé sur une seule de ces portions longitudinales ;
   -- ladite lèvre inclut une seconde charnière longitudinale intégrée dans cette lèvre, cette seconde charnière étant située à distance de la première charnière et située à la jonction de la lèvre avec le reste du corps ;
   -- ledit au moins un flocage s'étend jusqu'au niveau de ladite seconde charnière ;
   -- ladite première charnière est formée par un amincissement de ladite lèvre et/ou par une rainure longitudinale,
   -- ladite rainure longitudinale est formée sur une face de la lèvre opposée à ladite surface ;
   -- ledit au moins un matériau est un TPE ou ladite lèvre est en TPE ;
- lesdites bandes sont reliées respectivement à au moins deux bornes de raccordement audit circuit électrique ;
- ledit flocage recouvre lesdites bandes et la ou les pistes, mais ne recouvre pas lesdites bornes ; le flocage est donc situé à distance des bornes ;
   -- lesdites bornes sont situées au niveau d'une extrémité longitudinale du corps ;
   -- lesdites bornes sont situées à distance des extrémités longitudinales du corps et par exemple au milieu dudit corps ou dudit film ;
   -- lesdites bornes sont réalisées en métal ;
- les bandes et la ou les pistes sont recouvertes par une couche de passivation, et ledit flocage recouvre cette couche de passivation ; la couche de passivation a pour fonction d'isoler électriquement les bandes et la ou les pistes, et donc de les protéger de l'humidité par exemple ;
   -- les bandes sont identiques, en particulier elles ont des dimensions identiques ;
- les bandes ont une largeur ou dimension transversale comprise entre 0,2 et 10mm, et de préférence entre 0,2 et 5mm ; dans la présente demande, une largeur ou dimension transversale est mesurée selon un axe perpendiculaire à l'axe d'allongement du joint et du film ;
   -- la ou chaque piste de chauffage est rectiligne ;
   -- la ou chaque piste de chauffage est perpendiculaire aux bandes ;
- la ou chaque piste de chauffage a une longueur ou dimension axiale comprise entre 0,1 et 25mm, et de préférence entre 0,1 et 10mm ; dans la présente demande, une longueur ou dimension axiale est mesurée selon l'axe d'allongement du joint et du film ;
   -- les bandes chevauchent partiellement la ou les pistes, ou la ou les pistes chevauche(nt) partiellement les bandes ; ce chevauchement assure la liaison électrique entre les bandes et la ou les pistes ;
   -- les bandes sont séparées par une distance (distance inter-bandes) qui est inférieure à la largeur de la ou des pistes dont les extrémités chevauchent les bandes ou sont chevauchées par les bandes ;
- la ou chaque piste de chauffage a une longueur ou dimension axiale qui représente au moins 90% de la longueur ou dimension axiale des bandes, et qui est par exemple comprise entre 1000 et 1500mm ;
- les bandes électroconductrices sont en argent, et/ou la ou les pistes sont en carbone, par exemple à effet PTC ;
- les bandes électroconductrices et/ou la ou les pistes sont des couches d'encre imprimées et durcies ; l'encre peut être une encre destinée à durcir par séchage et évaporation d'un solvant par exemple ; en variante, l'encre peut être une encre destinée à durcit par polymérisation ou réticulation ;
- les bandes et la ou les pistes sont portées par un support plastique, par exemple en PET ;
- ledit film de chauffage est un film multicouche ;
- ledit film de chauffage comprend au moins une couche de colle ;
   -- la couche de colle est une couche thermocollable ;
   -- une couche de colle inférieure est située sous ledit film de chauffage ou sous ledit support plastique, en vue de la fixation du film de chauffage sur la surface du corps ;
   -- une couche de colle supérieure est située sur ledit film en vue de la fixation du flocage sur ce film ;
- le film de chauffage a une épaisseur comprise entre 10 et 500µm, et de préférence entre 100 et 300µm, et/ou une largeur ou dimension transversale comprise entre 2 et 10mm, et de préférence entre 3 et 8mm ;
   -- le corps comprend une partie longitudinale qui s'étend le long dudit axe et qui a en section une forme générale en U, cette partie étant réalisée dans un matériau plastique éventuellement armé ;
- le film de chauffage est intégralement recouvert par le flocage ;
   -- le flocage comprend un floc (fibres) ou un support, par exemple plastique, sur lequel est fixé un floc ; le support du floc peut être configuré pour protéger le film de chauffage contre l'humidité par exemple ;
- le joint d'étanchéité est un joint de porte ou d'un encadrement de porte d'un véhicule automobile, tel qu'un lécheur par exemple ;
- le film de chauffage comprend plusieurs pistes reliées auxdites bandes ;
   -- les pistes sont parallèlement les unes aux autre autres ;
   -- les pistes sont perpendiculaires aux bandes ou inclinées par rapport à ces bandes ;
- ledit film de chauffage comprend deux premières bandes électroconductrices entre lesquelles s'étend au moins une piste résistive de chauffage, et deux secondes bandes électroconductrices entre lesquelles s'étend au moins une autre piste résistive de chauffage, lesdites secondes bandes s'étendant dans le prolongement desdites premières bandes ;
   -- les premières bandes électroconductrices sont reliées à des premières bornes de raccordement, et lesdites secondes bandes électroconductrices sont reliées à des secondes bornes de raccordement ;
   -- les pistes ont des longueurs identiques ;
   -- en variante, au moins certaines des pistes ont des longueurs différentes ; de préférence, les pistes situées aux extrémités longitudinales du film de chauffage ou du corps du joint ont des longueurs plus importantes que celles situées à distance de ces extrémités ;
   -- le film est souple ;
   -- le film adopte la forme de la surface qu'il recouvre et peut avoir une partie ayant en section une forme incurvée ;
- le film de chauffage est configuré pour être alimenté à une puissance électrique inférieure à 100W par mètre, et qui est par exemple comprise entre 10 et 100W pour une longueur de 1m ; et
- le film de chauffage est configuré pour chauffer jusqu'à une température comprise entre 1 et 100°C pour une température extérieure atmosphérique comprise par exemple entre -40 et 10°C.

La présente invention concerne également un ensemble comportant un joint d'étanchéité tel que décrit ci-dessus, et une vitre d'un véhicule, en particulier automobile, la vitre étant configurée pour coopérer avec le joint en coulissant sur son flocage.

La présente invention concerne également une porte ou un encadrement de porte de véhicule, en particulier automobile, comportant un tel ensemble. Dans le cas d'une porte, le joint d'étanchéité est par exemple un lécheur d'une vitre mobile de cette porte. Les bornes de raccordement s'étendent de préférence vers le bas par rapport audit joint de façon à être situées dans un caisson de la porte. Elles sont alors situées dans une zone sèche et peuvent être raccordées au circuit électrique précité.

La présente invention concerne encore un procédé de fabrication d'un joint d'étanchéité tel que décrit dans ce qui précède, ce procédé comprenant les étapes de :
a) fabrication du corps du joint, de préférence par extrusion, et
b) fixation du film de chauffage et du flocage sur le corps du joint, de préférence par collage.

Avant l'étape b), le film de chauffage et le flocage sont de préférence solidarisés l'un à l'autre, de préférence par collage. Le flocage peut être réalisé directement sur le film de chauffage. En variante, le flocage comprend des fibres portées par un support, par exemple plastique, et ce support est fixé de préférence par collage sur le film de chauffage.

Avant l'étape b), le film de chauffage peut se présenter se présenter sous la forme d'un rouleau ou d'une bobine et être déroulé et coupé à une longueur souhaité.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig. 1] la figure 1 est une vue schématique en perspective d'une porte de véhicule ;
[Fig. 2] la figure 2 est une vue schématique en perspective d'une autre porte de véhicule ;
[Fig. 3] la figure 3 est une vue schématique en coupe transversale d'un joint d'étanchéité selon un mode de réalisation de l'invention ;
[Fig. 4] la figure 4 est une vue schématique partielle en perspective d'un film de chauffage du joint d'étanchéité de la figure 3 ;
[Fig. 4a-4b] la figure 4a est une vue à plus grande échelle d'une partie du film de chauffage de la figure 4, et la figure 4b est une vue à plus grande échelle d'une autre partie du film de chauffage de la figure 4 ;
[Fig. 4c-4d] la figure 4c est une vue en coupe selon la ligne IV-IV de la figure 4, et la figure 4d est une vue similaire à la figure 4c et illustrant une variante de réalisation ;
[Fig. 5] la figure 5 est une vue schématique partielle en perspective du joint d'étanchéité de la figure 3, sans un flocage ;
[Fig. 6] la figure 6 est une vue schématique partielle en perspective du joint d'étanchéité de la figure 3, avec le flocage ;
[Fig. 7] la figure 7 est une vue schématique partielle en perspective d'une variante de réalisation d'un film de chauffage ;
[Fig. 8] la figure 8 est une vue schématique en perspective d'une autre variante de réalisation d'un film de chauffage ;
[Fig. 9] la figure 9 est une vue à plus grande échelle d'une partie du film de chauffage de la figure 8 ;
[Fig. 10] la figure 10 est une vue schématique en perspective d'une autre variante de réalisation d'un film de chauffage ;
[Fig. 11] la figure 11 est une vue à plus grande échelle d'une partie du film de chauffage de la figure 10 ;
[Fig. 12] la figure 12 est une vue similaire à celle de la figure 11 et illustre une autre variante de réalisation du film de chauffage ; et
[Fig. 13] la figure 13 est une vue schématique en coupe transversale d'un joint d'étanchéité selon une autre variante de réalisation de l'invention.

### Description détaillée de l'invention

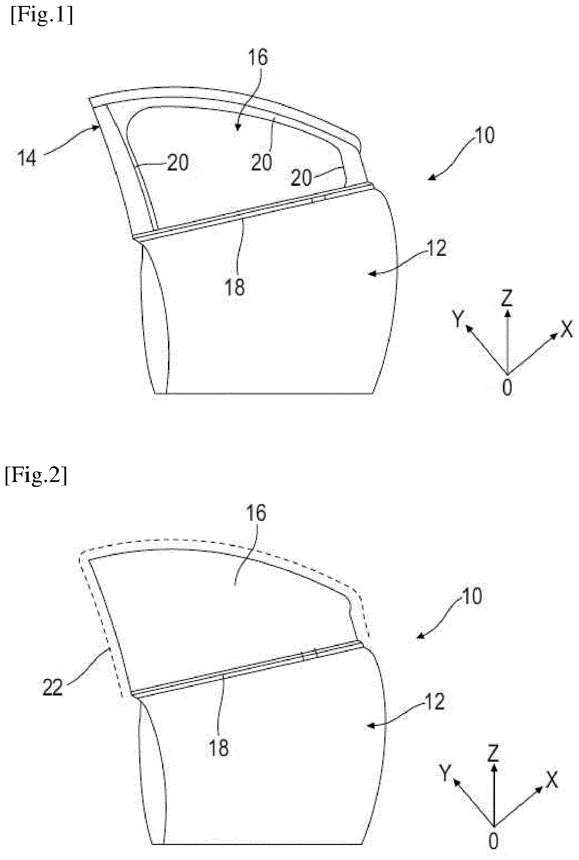

Les figures 1 et 2 montrent des portes 10 de véhicules automobiles.

Dans le cas de la figure 1, la porte 10 comprend un bâti inférieur 12 et un cadre supérieur 14. Le cadre 14 a une forme générale en U inversé et définit avec le bâti 12 un espace fermé par une vitre 16.

La vitre 16 est mobile et peut être déplacée de la position haute dans laquelle elle occupe l'espace du cadre 14 jusqu'à une position basse dans laquelle elle est logée dans le bâti 12.

La porte 10 comporte un joint ou un ensemble de joints destinés à coopérer avec la vitre 16 pour assurer une étanchéité entre la vitre 16, d'une part, et le bâti 12 et le cadre 14, d'autre part. Il s'agit ici d'une étanchéité à l'eau et à la poussière notamment.

Un premier joint 18 s'étend le long d'un bord supérieur du bâti 12 et est classiquement appelé lécheur. Lors du déplacement de la vitre 16, celle-ci frotte sur le joint 18. Un autre joint 20 s'étend le long du cadre 14 et a une forme générale en U et est appelé joint de coulisse. La vitre 16 est engagée dans des rainures du joint 20 qui guide la vitre lors de ses déplacements et assure un maintien et une étanchéité périphérique de la vitre lorsqu'elle est en position haute dans le cadre 14. Le joint 20 est porté par la porte 10 et donc l'ouvrant.

Dans le cas de la figure 2, la porte 10 comprend un bâti 12 et ne comprend pas de cadre supérieur. La porte 10 est également équipée d'un joint 18 du type lécheur. En position haute, la vitre 16 coopère avec un joint 22 (représenté en traits pointillés) qui est porté par un encadrement de porte du véhicule. Le joint 22 est ici porté par le dormant formé par la caisse du véhicule.

La présente invention a pour objet un joint d'étanchéité pour une vitre d'un véhicule, ce joint étant par exemple un joint choisi parmi les joints 18, 20 et 22, c'est-à-dire un lécheur, un joint de coulisse, un joint d'encadrement de porte.

La particularité du joint selon l'invention est qu'il est chauffant.

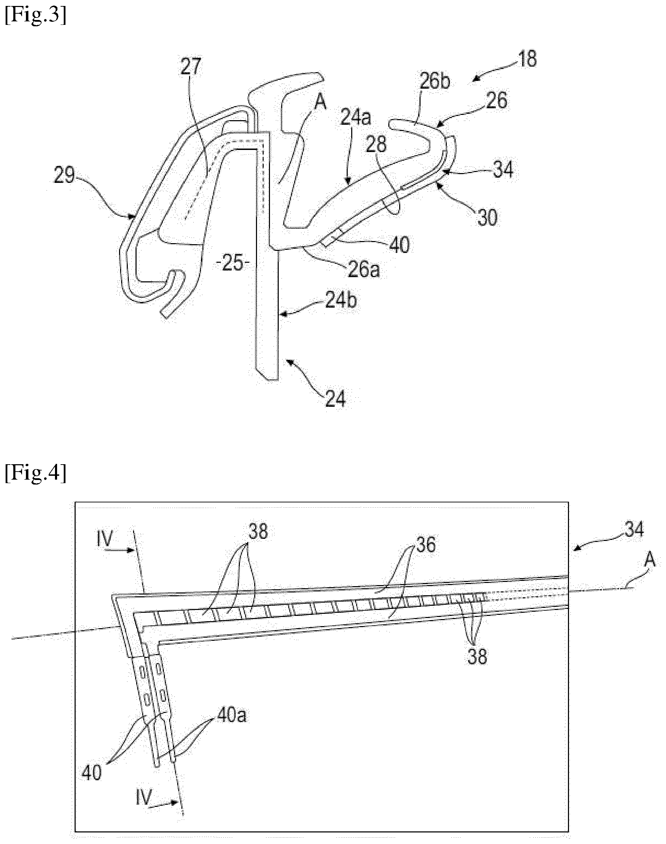

La figure 3 représente un mode de réalisation d'un joint chauffant selon l'invention. L'exemple illustré représente un lécheur et on comprend bien que l'invention n'est pas limitée à cette application particulière.

Le joint 18 de la figure 3 comprend un corps 24 qui a une forme allongée le long d'un axe A et qui est réalisé dans au moins un matériau. Dans l'exemple représenté, le corps 24 comprend pour l'essentiel deux parties à savoir une première partie d'étanchéité 24a et une seconde partie de fixation 24b.

La partie d'étanchéité 24a est réalisée dans un premier matériau et comprend au moins une lèvre 26 élastiquement déformable. Le premier matériau est par exemple : TPE ou TPV ou caoutchouc souple.

La partie de fixation 24b est réalisée dans un second matériau et a une forme générale en U inversé. Cette partie de fixation 24b définit ainsi une rainure 25 destinée à recevoir une feuillure de la porte 10, et en particulier du bord supérieur du bâti 12. Le second matériau est par exemple : polypropylène éventuellement chargé avec par exemple des fibres de verre ou du talc, caoutchouc de dureté supérieure, etc. La partie de fixation 24b peut être armée et comprendre une armature interne 27, par exemple métallique.

Le corps 24 peut être réalisé par extrusion, ses deux parties 24a, 24b étant alors réalisées et solidarisées ensemble lors de la fabrication du corps.

Le joint 18 peut comprendre un enjoliveur 29 rapporté et fixé, par exemple sur la partie de fixation 24b, afin d'améliorer l'esthétique du joint.

Dans le cas de la figure 2, l'enjoliveur 29 est situé à gauche du dessin et est destiné à être situé à l'extérieur du véhicule. La lèvre 26 est située du côté opposé et donc intérieur du véhicule. La vitre 16 se déplace en frottant ou glissant sur la lèvre 24.

La lèvre 26 comprend un bord longitudinal inférieur 26a de liaison au reste du corps 24, et un bord longitudinal supérieur 26b qui est libre et recourbé vers l'extérieur du véhicule. La lèvre 26 comprend une surface 28 qui s'étend entre les bords 26a, 26b, du côté intérieur du véhicule, et qui est recouverte par un flocage 30. Le flocage 30 a également une forme allongée le long de l'axe A.

Le joint 18 comprend en outre au moins un élément de chauffage s'étendant le long de l'axe A. Cet élément de chauffage se présente sous la forme d'un film multicouche 34 qui est intercalé entre la surface 28 et le flocage 30 dans l'exemple représenté.

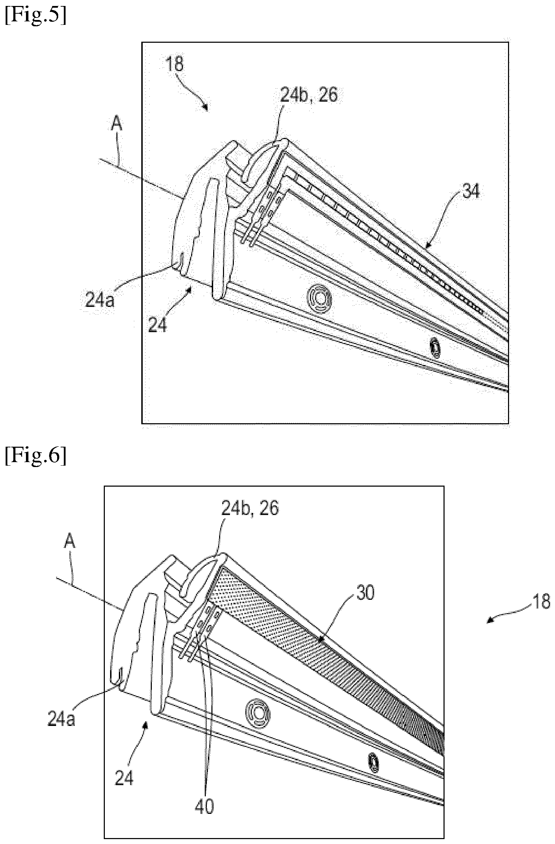

Le film 34 est relativement fin et souple. Comme on le voit dans le dessin, le flocage 30 peut recouvrir l'intégralité du film 34 qui est alors invisible à l'œil nu pour un utilisateur du véhicule ou un opérateur qui doit monter le joint sur le véhicule (cf. figure 6). Le flocage 30 recouvre une partie incurvée du bord 26b et le film 34 peut également s'étendre dans cette zone et comprendre ainsi une partie incurvée en section (cf. figure 1).

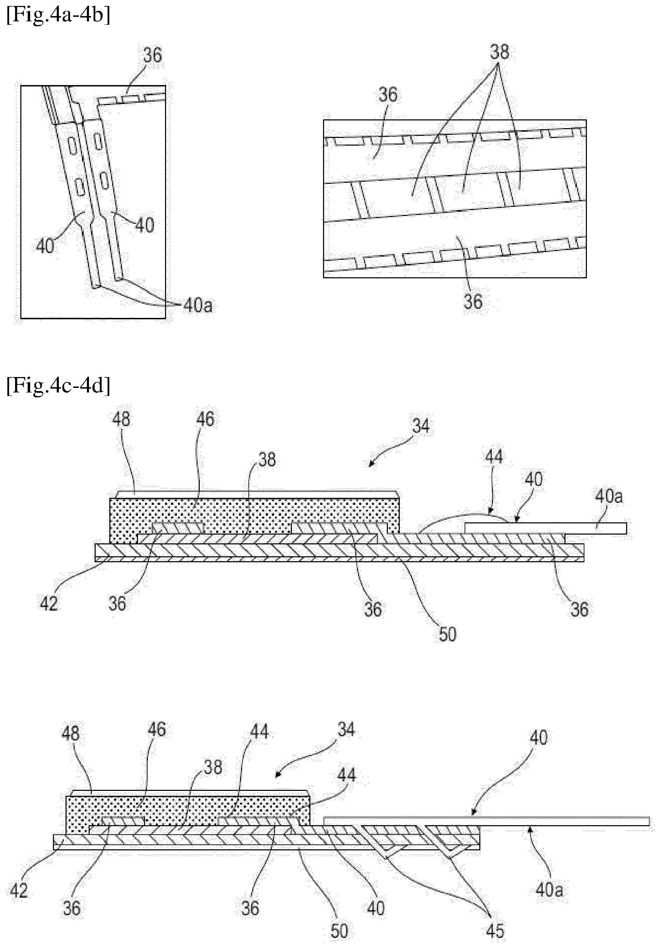

Les figures 4, 4a et 4b illustrent un mode de réalisation du film de chauffage 34. Le film 34 comprend :
- au moins deux bandes rectilignes 36 électroconductrices qui s'étendent parallèlement entre elles et à l'axe A, à distance l'une de l'autre, et qui sont destinées à être reliées à un circuit électrique, et
- au moins une piste résistive de chauffage 38 qui s'étend entre les bandes et qui sont reliées à ces bandes.

Dans l'exemple représenté, les bandes 36 sont reliées au circuit électrique par des bornes de raccordement 40 qui sont ici situées à une extrémité longitudinale du film 34 et peuvent donc se retrouver à une extrémité longitudinale du joint 18.

Les bornes 40 sont destinées à être reliées à une source d'énergie électrique.

Les bornes 40 ont chacune une forme générale allongée et s'étendent ici perpendiculairement aux bandes 36. La liaison des bornes 40 aux bandes 36 peut être réalisée par chevauchement des bornes 40 sur les bandes 36 ou par chevauchement des bandes 36 sur les bornes 40 (cf. figure 4c). Pour faciliter ce chevauchement, les extrémités des bandes 36 reliées aux bornes 40 peuvent être en angle droit.

Dans l'exemple représenté, plusieurs pistes rectilignes et parallèles s'étendent perpendiculairement aux bandes 36 et entre ces bandes. Comme pour les bornes 40, la liaison des pistes 38 aux bandes 36 peut être réalisée par chevauchement des pistes 38 sur les bandes 36 ou par chevauchement des bandes 36 sur les pistes 38 (cf. figure 4c).

Les chevauchements précités sont autorisés grâce à la structure multicouche du film 34. Ce film 34 comprend de préférence un support plastique 42, par exemple en PET. Ce support 42 est de préférence mince et flexible.

Sur ce support 42, peuvent être déposées, de préférence par impression, les bandes 36 ainsi que les pistes 38. On utilise alors des encres adaptées pour être imprimées sur le support 42 du film 34. Pour les bandes 36, il est par exemple possible d'utiliser un alliage à base d'argent. Pour les pistes 38, il est par exemple possible d'utiliser une encre à base de carbone, par exemple à effet PTC.

Dans le cas où les pistes 38 seraient imprimées en premier sur le support 42, les bandes 36 seraient ensuite imprimées sur le support 42 et chevaucheraient en partie les pistes 38.

Les bornes 40 en métal sont de préférence serties sur la bande inférieure 36 qui présente éventuellement une excroissance adaptée à ce sertissage (cf. figure 4d). Elles peuvent en alternative être fixées avec de la colle 44 sur le support 42 et appliquées contre les extrémités des bandes 36 (cf. figure 4c). Pour maintenir l'ensemble, le protéger et l'isoler électriquement, une couche de passivation 46 est de préférence déposée sur l'intégralité du support 42 et recouvre donc les bandes 36, les pistes 38, et les parties des bornes 40 reliées aux bandes. On comprend donc que les bornes 40 conservent des extrémités libres 40a non recouvertes par cette couche de passivation afin d'autoriser le raccordement électrique du film au circuit.

La figure 3 montre une position possible des bornes 40. Ces bornes 40 s'étendent de préférence vers le bas lorsque le joint 18 est en position montée sur la porte. Ces bornes 40 sont de préférence logées à l'intérieur du bâti 12 de la porte 10 de façon à ce que le raccordement au circuit puisse avoir lieu à l'intérieur du bâti, c'est-à-dire dans une zone à l'abri de l'humidité.

La figure 5 montre la face intérieure du joint 18 de la figure 3, avec le film de chauffage 34 mais sans le flocage 30. La figure 6 montre le joint 18 complet avec son flocage et permet de voir que le film est entièrement recouvert et donc caché et protégé par le flocage 30, à l'exception des extrémités des bornes 40.

Le flocage 30 est une couche de fibres, en général courtes et fines. La couche de fibres peut être directement formée sur le film de chauffage 34. En variante, le flocage 30 peut comprendre une couche de fibres et un support, par exemple plastique, de cette couche de fibres.

Le flocage 30 peut être fixé par collage sur le film de chauffage 34. Pour cela, une couche de colle 48 peut être prévue sur le film 34, et en particulier sur la couche de passivation 46. La couche de colle 48 est alors recouverte par le flocage 30, c'est-à-dire que la couche de fibres est déposée sur cette couche de colle 48, ou le support portant la couche de fibres est appliqué sur cette couche de colle 48.

Le film 34 peut comprendre une autre couche de colle 50 sur sa face inférieure opposée au flocage 30, afin d'assurer sa fixation sur la surface 28. Cette couche de colle 50 est par exemple une couche de colle thermoactivable.

Dans la présente demande, on entend par « colle » 44, 48, 50, soit une composition avec solvant évaporable, mais aussi par extension, une composition thermofusible et thermoréactivable, ou encore un adhésif double face.

Dans l'exemple précité, on comprend donc que le film de chauffage 34 comprend plusieurs couches qui sont, du bas vers le haut, une couche de colle 50, un support 42, des bandes électroconductrices 36, les pistes 38, la couche de passivation 46, et la couche de colle 48.

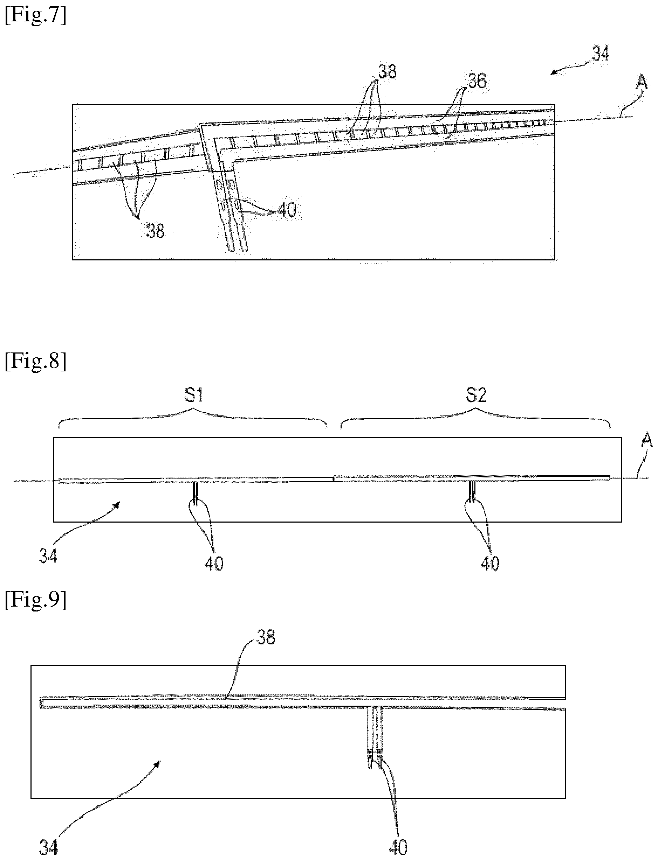

La figure 7 représente une variante de réalisation du film de chauffage 34 qui diffère de celui décrit dans ce qui précède essentiellement en ce que ses bornes 40 sont situées à distance des extrémités longitudinales du film 34 et peuvent donc se retrouver à distance des extrémités longitudinales du joint 18.

La figure 8 illustre une autre variante de réalisation du film de chauffage 34 qui comprend d'une part deux sections S1, S2 adjacentes situées à côté l'une de l'autre et ayant des fonctionnements indépendants. La première section S1 s'étend sur une moitié de la longueur du film 34 ou du support 42 et peut être activée indépendamment de la seconde section S2 qui s'étend sur la moitié restante du film ou du support. Les deux sections s'étendent dans le prolongement l'une de l'autre.

La première section S1 du film comprend deux bandes électroconductrices 36 entre lesquelles s'étend au moins une piste résistive 38 et qui sont reliées à deux bornes de raccordement 40.

La seconde section S2 du film comprend deux autres bandes électroconductrices 36 qui s'étendent respectivement dans le prolongement des bandes 36 de la première section S1 et entre lesquelles s'étend au moins une piste résistive 38. Ces autres bandes 36 sont en outre reliées à deux bornes de raccordement 40.

Les bornes des deux sections S1, S2 sont reliées au même circuit électrique. La figure 9 est une vue à plus grande échelle d'une partie de la figure 8 et permet de constater que chacune des sections S1, S2 comprend une seule piste résistive 38. Cette piste 38 a une longueur sensiblement égale à la longueur des bandes 36. La piste38 a donc une longueur très supérieure (et par exemple plus de 50 fois supérieure) à sa largeur.

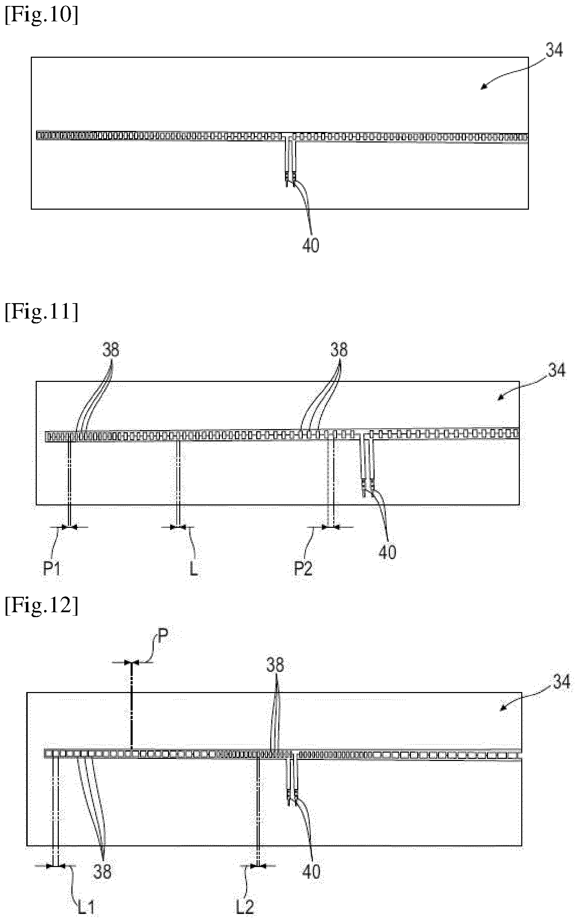

Les figures 10 et 11 montrent une autre variante de réalisation du film de chauffage 34 dans laquelle les pistes 38 ont des longueurs L identiques mais sont situées à une distance (P1, P2) les unes des autres, qui varie. A proximité des extrémités longitudinales du film 34, le pas P1 qui sépare deux pistes 38 consécutives est le plus faible, et ce pas augmente à mesure que l'on se rapproche du milieu du film (P1 -> P2) où sont situées les bornes 40. Les pistes 38 ont des largeurs identiques.

La figure 12 montrent une autre variante de réalisation du film de chauffage 34 dans lequel les pistes 38 ont des longueurs (L1, L2) qui varient et sont séparées les unes des autres par un pas (P) constant. A proximité des extrémités longitudinales du film 34, les pistes ont la longueur (L1) la plus importante, et cette longueur diminue à mesure que l'on se rapproche du milieu du film (L1 -> L2) où sont situées les bornes 40.

Les pistes 38 ont des largeurs identiques.

Dans encore une autre variante non représentée, le film de chauffage pourrait comprendre plusieurs pistes alimentées par plusieurs paires de bornes de raccordement électrique. Chacune des paires assurerait l'alimentation électrique de l'une des pistes.

Dans encore une autre variante, les bornes pourraient être reliées à la source d'énergie électrique par un système de commande qui serait relié à un capteur de température externe ou atmosphérique du véhicule. Le système serait pas exemple configuré pour activer le chauffage lorsque la température est inférieure à un certain seul, par exemple 5°C, et pour inhiber le chauffage au-dessus de ce seuil.

Dans encore une autre variante, le système de commande pourrait être configuré pour commander le chauffage en fonction d'une vitesse de déplacement de la vitre destinée à coopérer avec le joint de façon à optimiser le temps de contact entre le joint et la vitre et ainsi le dégivrage de la vitre.

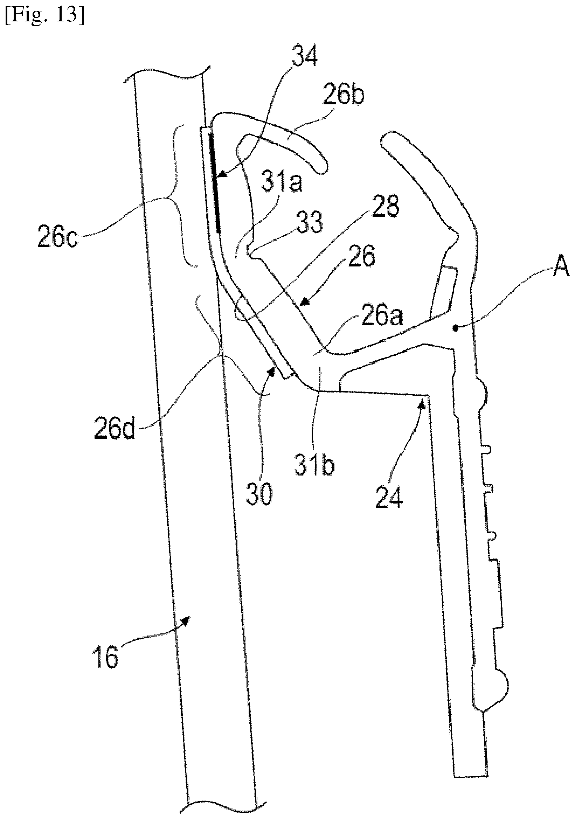

La figure 13 illustre une autre variante de réalisation d'un joint selon l'invention dans laquelle la lèvre 26 de support du film de chauffage 34 comprend une charnière 31a intégrée. Cette charnière 31a s'étend en direction longitudinale et donc parallèlement à l'axe A. Elle sépare la lèvre 26 en deux portions longitudinales, ici respectivement supérieure 26c et inférieure 26d.

Le bord supérieur 26b de la lèvre 26 est recourbé comme évoqué dans ce qui précède. Son bord inférieur 26a est relié au reste du corps 24 et peut former une autre charnière longitudinale 31b intégrée. Les charnières 31a, et 31b sont à distance l'une de l'autre et permettent à la lèvre de se déformer pour épouser au mieux la forme de la vitre 16 et optimiser la surface de contact avec la vitre et donc la capacité de dégivrage de la vitre.

On constate que la charnière 31a est formée par un amincissement de la lèvre 26 ou par une rainure longitudinale 33. Cette rainure 33 est formée sur une face de la lèvre 26 opposée à la surface 28.

La surface 28 s'étend sur au moins une de ces portions longitudinales 26c, 26d, et sur les deux portions dans l'exemple représenté. Le flocage 30 s'étend ainsi sur les deux portions 26c, 26d dans l'exemple représenté. Le film de chauffage 34 est situé sur au moins une de ces portions longitudinales 26c, 26d, et seulement sur la portion 26c dans l'exemple représenté. Le flocage s'étend sensiblement depuis le bord supérieur 26b jusqu'à la seconde charnière 31b.

Dans encore une autre variante non représentée, le joint d'étanchéité comporterait deux lèvres ou plus qui seraient chacune équipées d'un élément de chauffage sous forme de film et qui seraient destinées à coopérer avec une même vitre.

Le film 34 est de préférence configuré peut être alimenté à une puissance électrique inférieure à 150W et qui est par exemple comprise entre 10 et 100W. Il peut être configuré pour chauffer jusqu'à une température comprise entre 1 et 100°C pour une température atmosphérique comprise par exemple entre -40 et 10°C.

Comme évoqué dans ce qui précède, le film 34 peut équiper plusieurs types de joint d'étanchéité pour vitre de véhicule. Avantageusement, avant montage du film de chauffage sur un joint, celui-ci peut être enroulé et se présenter sous la forme d'une bobine. La bobine peut comprendre un unique film de chauffage ou une pluralité de films de chauffage successifs disposés les uns à la suite des autres et qui peuvent être séparés les uns des autres par détachement ou découpe par exemple. En variante, les films de chauffage sont produits indépendamment les uns des autres.

Le montage du film de chauffage sur un joint peut être réalisé en direct sur une ligne de fabrication du joint ou peut être réalisé sur un joint particulier pour un nouveau véhicule ou pour le remplacement d'un joint classique de véhicule par un joint chauffant.

## Revendications

1. Joint d'étanchéité (18, 20, 22) pour une vitre (16) d'un véhicule, en particulier automobile, ce joint comportant :
- un corps (24) qui a une forme générale allongée le long d'un axe (A) et qui est réalisé dans au moins un matériau,
- au moins un flocage (30) situé sur une surface (28) dudit corps (24) et s'étendant le long dudit axe (A), et
- au moins un élément de chauffage s'étendant le long dudit axe (A),
**caractérisé en ce que** ledit au moins un élément de chauffage comprend au moins un film multicouche de chauffage (34) qui a une forme générale allongée le long dudit axe (A) et qui est intercalé entre le flocage (30) et ladite surface (28) dudit corps, ce film de chauffage (34) comprenant :
- au moins deux bandes rectilignes électroconductrices (36) qui s'étendent parallèlement entre elles et audit axe (A), à distance l'une de l'autre, et qui sont destinées à être reliées à un circuit électrique, et
- au moins une piste résistive de chauffage (38) qui s'étend entre lesdites bandes (36) et qui sont reliées à ces bandes (36).

2. Joint d'étanchéité (18, 20, 22) selon la revendication 1, dans lequel le corps (24) comprend une lèvre (26) élastiquement déformable qui s'étend le long dudit axe (A) et qui comprend ladite surface (28).

3. Joint d'étanchéité (18, 20, 22) selon la revendication 1 ou 2, dans lequel la lèvre (26) comprend deux portions longitudinales (26c, 26d) adjacentes reliées entre elles par une première charnière longitudinale (31a) intégrée dans cette lèvre (26), ledit au moins un flocage (30) s'étendant sur au moins une de ces portions longitudinales (26c, 26d) et ledit au moins un film de chauffage (34) étant situé sur au moins une de ces portions longitudinales (26c, 26d).

4. Joint d'étanchéité (18, 20, 22) selon l'une des revendications précédentes, dans lequel lesdites bandes (36) sont reliées respectivement à au moins deux bornes (40) de raccordement audit circuit électrique.

5. Joint d'étanchéité (18, 20, 22) selon la revendication précédente, dans lequel ledit flocage (30) recouvre lesdites bandes (36) et la ou les pistes (38), mais ne recouvre pas lesdites bornes (40).

6. Joint d'étanchéité (18, 20, 22) selon l'une des revendications précédentes, dans lequel les bandes (36) et la ou les pistes (38) sont recouvertes par une couche de passivation, et ledit flocage (30) recouvre cette couche de passivation.

7. Joint d'étanchéité (18, 20, 22) selon l'une des revendications précédentes, dans lequel les bandes ont une largeur ou dimension transversale comprise entre 0,2 et 10mm, et de préférence entre 0,2 et 5mm.

8. Joint d'étanchéité (18, 20, 22) selon l'une des revendications précédentes, dans lequel la ou chaque piste de chauffage (38) a une longueur ou dimension axiale comprise entre 0,1 et 25mm, et de préférence entre 0,1 et 10mm.

9. Joint d'étanchéité (18, 20, 22) selon l'une des revendications précédentes, dans lequel les bandes électroconductrices (36) sont en argent, et/ou la ou les pistes (38) sont en carbone, par exemple à effet PTC.

10. Joint d'étanchéité (18, 20, 22) selon l'une des revendications précédentes, dans lequel les bandes électroconductrices (36) et/ou la ou les pistes (38) sont des couches d'encre imprimées et durcies.

11. Joint d'étanchéité (18, 20, 22) selon l'une des revendications précédentes, dans lequel les bandes (36) et la ou les pistes (38) sont portées par un support (52) plastique, par exemple en PET.

12. Joint d'étanchéité (18, 20, 22) selon l'une des revendications précédentes, dans lequel ledit film de chauffage (34) comprend au moins une couche de colle (48, 50).

13. Joint d'étanchéité (18, 20, 22) selon l'une des revendications précédentes, dans lequel le film de chauffage (34) a une épaisseur comprise entre 10 et 500µm, et de préférence entre 100 et 300µm, et/ou une largeur ou dimension transversale comprise entre 2 et 10mm, et de préférence entre 3 et 8mm.

14. Joint d'étanchéité (18, 20, 22) selon l'une des revendications précédentes, dans lequel le film de chauffage (34) comprend plusieurs pistes (38) reliées auxdites bandes (36).

15. Joint d'étanchéité (18, 20, 22) selon l'une des revendications précédentes, dans lequel ledit film de chauffage (34) comprend deux premières bandes électroconductrices (36) entre lesquelles s'étend au moins une piste résistive de chauffage (38), et deux secondes bandes électroconductrices (36) entre lesquelles s'étend au moins une autre piste résistive de chauffage (38), lesdites secondes bandes s'étendant dans le prolongement desdites premières bandes.

16. Joint d'étanchéité (18, 20, 22) selon l'une des revendications précédentes, dans lequel le film de chauffage (34) est configuré pour :
- être alimenté à une puissance électrique inférieure à 100W par mètre, et qui est par exemple comprise entre 10 et 100W pour une longueur de 1m, et/ou
- chauffer jusqu'à une température comprise entre 1 et 100°C pour une température extérieure atmosphérique comprise par exemple entre -40 et 10°C.

17. Ensemble comportant un joint d'étanchéité (18, 20, 22) selon l'une des revendications précédentes, et une vitre (16) d'un véhicule, en particulier automobile, la vitre étant configurée pour coopérer avec le joint en coulissant sur son flocage (30).

## Patentansprüche

1. Dichtung (18, 20, 22) für eine Scheibe (16) eines Fahrzeugs, insbesondere Kraftfahrzeugs, wobei diese Dichtung umfasst:
- einen Körper (24), der eine allgemeine längliche Form entlang einer Achse (A) aufweist, und der aus mindestens einem Werkstoff hergestellt wird,
- mindestens eine Beflockung (30), die sich auf einer Oberfläche (28) des Körpers (24) befindet, und sich entlang der Achse (A) erstreckt, und
- mindestens ein Heizelement, das sich entlang der Achse (A) erstreckt,
**dadurch gekennzeichnet, dass** das mindestens eine Heizelement mindestens eine mehrschichtige Heizfolie (34) umfasst, die eine allgemeine längliche Form entlang der Achse (A) aufweist, und die zwischen der Beflockung (30) und der Oberfläche (28) des Körpers eingelegt ist, wobei diese Heizfolie (34) umfasst:
- mindestens zwei geradlinige elektrisch leitende Bänder (36), die sich parallel zueinander und zur Achse (A), in einem Abstand zueinander, erstrecken, und die dazu bestimmt sind, an einen Stromkreis angeschlossen zu werden, und
- mindestens eine Heizwiderstandsspur (38), die sich zwischen den Bändern (36) erstreckt, und die an diese Bänder (36) angeschlossen sind.

2. Dichtung (18, 20, 22) nach Anspruch 1, wobei der Körper (24) eine elastisch verformbare (26) Lippe umfasst, die sich entlang der Achse (A) erstreckt, und welche die Oberfläche (28) umfasst.

3. Dichtung (18, 20, 22) nach Anspruch 1 oder 2, wobei die Lippe (26) zwei benachbarte Längsabschnitte (26c, 26d) umfasst, die durch ein erstes Längsscharnier (31a), das in dieser Lippe (26) integriert ist, aneinander angeschlossen sind, wobei sich die mindestens eine Beflockung (30) auf mindestens einem der Längsabschnitte (26c, 26d) erstreckt, und sich die mindestens eine Heizfolie (34) auf mindestens einem dieser Längsabschnitte (26c, 26d) befindet.

4. Dichtung (18,20, 22) nach einem der vorstehenden Ansprüche, wobei die Bänder (36) jeweils an mindestens zwei Klemmen (40) zum Anschluss an den Stromkreis angeschlossen sind.

5. Dichtung (18, 20, 22) nach dem vorstehenden Anspruch, wobei die Beflockung (30) die Bänder (36) und die Spur oder Spuren (38) abdeckt, jedoch nicht die Klemmen (40) abdeckt.

6. Dichtung (18,20, 22) nach einem der vorstehenden Ansprüche, wobei die Bänder (36) und die Spur oder Spuren (38) von einer Passivierungsschicht abgedeckt werden, und die Beflockung (30) diese Passivierungsschicht abdeckt.

7. Dichtung (18,20, 22) nach einem der vorstehenden Ansprüche, wobei die Bänder eine Breite oder Querabmessung aufweisen, die zwischen 0,2 und 10mm, und vorzugsweise zwischen 0,2 und 5mm liegt.

8. Dichtung (18,20, 22) nach einem der vorstehenden Ansprüche, wobei die oder jede Heizspur (38) eine Länge oder axiale Abmessung aufweisen, die zwischen 0,1 und 25mm, und vorzugsweise zwischen 0,1 und 10mm liegt.

9. Dichtung (18,20, 22) nach einem der vorstehenden Ansprüche, wobei die elektrisch leitenden Bänder (36) aus Silber sind, und/oder die Spur oder Spuren (38) aus Kohlenstoff, beispielsweise mit PTC-Wirkung sind.

10. Dichtung (18, 20, 22) nach einem der vorstehenden Ansprüche, wobei die elektrisch leitenden Bänder (36) und/oder die Spur oder Spuren (38) gedruckten und gehärteten Tintenschichten sind.

11. Dichtung (18, 20, 22) nach einem der vorstehenden Ansprüche, wobei die Bänder (36) und die Spur oder Spuren (38) von einem Kunststoffträger (52), beispielsweise aus PET getragen werden.

12. Dichtung (18, 20, 22) nach einem der vorstehenden Ansprüche, wobei die Heizfolie (34) mindestens eine Klebeschicht (48, 50) umfasst.

13. Dichtung (18, 20, 22) nach einem der vorstehenden Ansprüche, wobei die Heizfolie (34) eine Dicke, die zwischen 10 und 500 µm, vorzugsweise zwischen 100 und 300 µm liegt, und/oder eine Breite oder Querabmessung aufweist, die zwischen 2 und 10 mm, und vorzugsweise zwischen 3 und 8 mm liegt.

14. Dichtung (18, 20, 22) nach einem der vorstehenden Ansprüche, wobei die Heizfolie (34) mehrere Spuren (38) umfasst, die an die Bänder (36) angeschlossen sind.

15. Dichtung (18, 20, 22) nach einem der vorstehenden Ansprüche, wobei die Heizfolie (34) zwei erste elektrisch leitende Bänder (36) umfasst, zwischen denen sich mindestens eine Heizwiderstandsspur (38) erstreckt, und zwei zweite elektrisch leitende Bänder (36), zwischen denen sich mindestens eine weitere Heizwiderstandsspur (38) erstreckt, wobei sich die zweiten Bänder in der Fortsetzung der ersten Bänder erstrecken.

16. Dichtung (18, 20, 22) nach einem der vorstehenden Ansprüche, wobei die Heizfolie (34) konfiguriert ist, um:
- mit einer elektrischen Leistung von weniger als 100W pro Meter versorgt zu werden, und die beispielsweise zwischen 10 und 100W für eine Länge von 1 m liegt, und/oder
- bis zu einer Temperatur zu heizen, die zwischen 1 und 100°C bei einer Außenumgebungstemperatur liegt, die beispielsweise zwischen -40 und 10°C liegt.

17. Einheit, die eine Dichtung (18, 20,22) nach einem der vorstehenden Ansprüche, und eine Scheibe (16) eines Fahrzeugs, insbesondere eine Kraftfahrzeugs beinhaltet, wobei die Scheibe zum Zusammenwirken mit der Dichtung durch Gleiten auf deren Beflockung (30) konfiguriert ist.

## Claims

1. A seal (18, 20, 22) for a window (16) of a vehicle, in particular for a motor vehicle, this seal comprising:
- a body (24) which has a generally elongated shape along an axis (A) and which is made of at least one material,
- at least one flocking (30) located on a surface (28) of said body (24) and extending along said axis (A), and
- at least one heating element extending along said axis (A),
**characterised in that** said at least one heating element comprises at least one multilayer heating film (34) which has a generally elongated shape along said axis (A) and which is interposed between the flocking (30) and said surface (28) of said body, this heating film (34) comprising:
- at least two electrically conductive straight strips (36) which extend parallel to each other and to said axis (A), at a distance from each other, and which are intended to be connected to an electrical circuit, and
- at least one resistive heating track (38) which extends between said strips (36) and is connected to these strips (36).

2. The seal (18, 20, 22) according to claim 1, wherein the body (24) comprises an elastically deformable lip (26) which extends along said axis (A) and which comprises said surface (28).

3. The seal (18, 20, 22) according to claim 1 or 2, wherein the lip (26) comprises two adjacent longitudinal segments (26c, 26d) connected each other by a first longitudinal hinge (31a) integrated into that lip (26), said at least one flocking (30) extending over at least one of those longitudinal segments (26c, 26d) and said at least one heating film (34) being located on at least one of those longitudinal segments (26c, 26d).

4. The seal (18, 20, 22) according to any of the preceding claims, wherein said strips (36) are connected respectively to at least two terminals (40) for connection to said electrical circuit.

5. The seal (18, 20, 22) according to the preceding claim, wherein said flocking (30) covers said strips (36) and the track or the tracks (38), but does not cover said terminals (40).

6. The seal (18, 20, 22) according to any of the preceding claims, wherein the strips (36) and the track or the tracks (38) are covered by a passivation layer, and said flocking (30) covers this passivation layer.

7. The seal (18, 20, 22) according to any of the preceding claims, wherein the strips have a width or transverse dimension of between 0.2 and 10mm, and preferably between 0.2 and 5mm.

8. The seal (18, 20, 22) according to any of the preceding claims, wherein the or each heating track (38) has an axial length or dimension of between 0.1 and 25mm, and preferably between 0.1 and 10mm.

9. The seal (18, 20, 22) according to any of the preceding claims, wherein the electrically conductive strips (36) are made of silver, and/or the track or the tracks (38) are made of carbon, for example with PTC effect.

10. The seal (18, 20, 22) according to any of the preceding claims, wherein the electrically conductive strips (36) and/or the track or the tracks (38) are printed and cured ink layers.

11. The seal (18, 20, 22) according to any of the preceding claims, wherein the strips (36) and the track or the tracks (38) are carried by a plastic support (52), for example made of PET.

12. The seal (18, 20, 22) according to any of the preceding claims, wherein said heating film (34) comprises at least one glue layer (48, 50).

13. The seal (18, 20, 22) according to any of the preceding claims, wherein the heating film (34) has a thickness of between 10 and 500µm, and preferably between 100 and 300µm, and/or a width or transverse dimension of between 2 and 10mm, and preferably between 3 and 8mm.

14. The seal (18, 20, 22) according to any of the preceding claims, wherein the heating film (34) comprises a plurality of tracks (38) connected to said strips (36).

15. The seal (18, 20, 22) according to any of the preceding claims, wherein said heating film (34) comprises two first electrically conductive strips (36) between which at least one heating resistive track (38) extends, and two second electrically conductive strips (36) between which at least one further heating resistive track (38) extends, said second strips extending in the extension of said first strips.

16. The seal (18, 20, 22) according to any of the preceding claims, wherein the heating film (34) is configured:
- to be powered at an electrical power of less than 100W per metre, and which is for example between 10 and 100W for a length of 1m, and/or
- to heat to a temperature of between 1 and 100°C at an outside atmospheric temperature of, for example, between -40 and 10°C.

17. An assembly comprising a seal (18, 20, 22) according to one of the preceding claims, and a window (16) of a vehicle, in particular for a motor vehicle, the window being configured to cooperate with the seal by sliding on its flocking (30).
